# DEMANDE DE BREVET EUROPEEN

(11) **EP 1 296 497 A1**
(43) Date de publication de la demande: **26.03.2003**
(21) Numéro de dépôt: 02078818.8
(22) Date de dépôt: 17.09.2002
(51) Int. Cl.: H04L 29/06

(54) **Procédé de distribution d'un contenu multimédia par l'intermédiare d'un serveur proxy mobile**

(30) Priorité: 25.09.2001 FR 0112327
(71) Demandeur: Koninklijke Philips Electronics N.V., 5621 BA Eindhoven (NL)
(72) Inventeur: Mallart, Raoul, Société Civile S.P.I.D., 75008 Paris (FR)
(74) Mandataire: de la Fouchardière, Marie-Noelle

(57) **Abrégé**

L'invention propose un procédé de distribution de contenu multimédia (film, jeux, informations touristiques) pour utilisation sur un dispositif portable. Le procéde selon l'invention consiste à télécharger un contenu à utiliser d'un serveur (3) vers une station de base (2), à stocker le contenu dans une mémoire de stockage de la station de base, et à transmettre le contenu de la station de base vars un dispositif portable d'utilisation de contenu multimédia (1) pour une utilisation au fur et à mesure de la transmission.
Application : visualisation de vidéo dans un véhicule sur un écran portable.

## Description

### Domaine de l'invention

La présente invention concerne un système de communication sans fil comportant au moins un serveur et au moins un terminal mobile, pour télécharger des données dudit serveur vers ledit terminal mobile, ledit terminal mobile comportant une mémoire de stockage pour stocker des données téléchargées.

Elle concerne aussi un serveur, une station de base et un dispositif portable d'utilisation de contenu multimédia susceptibles d'être utilisés dans un tel système de communication sans fil.

Elle concerne aussi un procédé de distribution d'un contenu multimédia.

### Arrière plan technologique de l'invention

La demande de brevet européen n°1 022 656 déposée le 15.12.1999 décrit un système de radio-communication qui comporte un serveur pour télécharger des programmes, tels que des programmes de navigation ou des jeux, vers des terminaux installés dans des véhicules.

L'invention traite notamment du téléchargement d'un contenu multimédia, par exemple d'une vidéo, d'un serveur vers un terminal, pour une utilisation dudit contenu multimédia, par exemple dans un véhicule.

### Résumé de l'invention

Un système de communication sans fil selon l'invention et tel que décrit dans le paragraphe introductif est caractérisé en ce que lesdites données constituant un contenu multimédia, ledit terminal mobile comporte une station de base et un dispositif portable d'utilisation de contenu multimédia, ladite mémoire de stockage étant contenue dans ladite station de base, ledit serveur et ladite station de base comportent un module de téléchargement sans fil ayant un débit suffisant pour télécharger rapidement un contenu multimédia dudit serveur vers ladite station de base lorsque ladite station de base est dans une zone de couverture dudit serveur, et ladite station de base et ledit dispositif portable comportent un module de transmission sans fil ayant un débit suffisant pour transmettre audit dispositif portable un contenu multimédia stocké dans ladite mémoire de stockage, pour une utilisation dudit contenu multimédia au fur et à mesure de ladite transmission.

L'invention qui consiste à télécharger le contenu multimédia depuis un serveur permet de s'affranchir du support physique (disque ou cassette). Elle permet d'accéder à un large choix de contenus sans avoir à détenir les supports physiques correspondant. Ceci est particulièrement avantageux lorsque l'utilisateur est en déplacement. L'invention permet aussi d'adapter les contenus multimédia proposés à la localisation de l'utilisateur, par exemple de lui proposer des informations touristiques relatives à la zone géographique dans laquelle il se trouve.

Les réseaux de radio-communication mobiles existant actuellement sont trop lents et trop chers pour être utilisés pour transmettre de grandes quantités de données, en continu, d'un serveur vers un dispositif portable sur une durée importante. Il n'est en particulier pas possible de transmettre une vidéo en continu pendant toute la durée de visualisation de la vidéo d'un serveur vers un terminal mobile pour une application de vidéo à la demande. A titre d'exemple, la norme GPRS permet de transmettre 50kbps (kilo bits par seconde) lorsque le réseau n'est pas trop chargé. Avec la norme UMTS, on peut atteindre des débits de 384kbps, mais ce débit est à partager entre tous les utilisateurs d'une même cellule. Or actuellement, pour transmettre une vidéo de qualité satisfaisante en continu, il est nécessaire de disposer d'un débit d'au moins 600kbps.

L'invention, qui consiste à télécharger le contenu multimédia vers le terminal mobile via une liaison sans fil très haut débit lorsque la station de base se trouve dans la zone de couverture du serveur, et à stocker le contenu multimédia localement préalablement à toute utilisation, permet de s'affranchir de ces limitations.

Par ailleurs il est souhaitable que le dispositif d'utilisation de contenu multimédia soit un dispositif portable afin d'améliorer le confort et la souplesse d'utilisation pour l'utilisateur. En particulier lorsque ce dispositif portable est un dispositif portable de visualisation, l'utilisateur peut le positionner à sa convenance pour optimiser son confort de visualisation. De plus, en utilisant un dispositif portable selon l'invention, l'utilisateur peut accéder au contenu multimédia de son choix à chaque fois qu'il se trouve à proximité d'une station de base. Un tel dispositif portable est par exemple utilisable avec une station de base fixe placée dans la maison lorsque l'utilisateur est à la maison, et avec une station de base mobile placée dans une voiture, dans un train, ou dans un avion lorsqu'il est en déplacement.

L'invention, qui consiste à stocker le contenu multimédia dans la station de base et à transmettre le contenu multimédia au dispositif portable au fur et à mesure de son utilisation, permet d'éviter de stocker le contenu multimédia dans le dispositif portable. Ceci est très avantageux parce que le stockage d'un contenu multimédia requière une grosse mémoire, et que de telles mémoires sont chers, encombrantes et consomment beaucoup d'énergie, ce qui nuit à l'autonomie du dispositif portable.

Avantageusement, ledit dispositif portable comporte une interface utilisateur pour sélectionner un contenu multimédia à télécharger, et pour payer ledit contenu multimédia à télécharger.

La station de base est par exemple placée dans un véhicule (voiture, bus, train, avion), et le serveur est par exemple placé dans une aire de service et/ou de stationnement (par exemple dans une station service, dans un parking...).

### Brève description des figures

D'autres détails et avantages de l'invention apparaîtront dans la description qui va suivre faite en regard des dessins annexés qui sont donnés à titre d'exemples non limitatifs et dans lesquels :
- la figure 1 est un schéma d'un premier mode de réalisation d'un système de communication sans fil selon l'invention,
- la figure 2 est un schéma d'un second mode de réalisation d'un système de communication sans fil selon l'invention,
- la figure 3 est un diagramme décrivant les étapes d'un premier mode de réalisation d'un procédé selon l'invention de distribution de contenu multimédia,
- la figure 4 est un diagramme décrivant les étapes d'un second mode de réalisation d'un procédé selon l'invention de distribution de contenu multimédia,
- la figure 5 est un schéma d'un quatruième mode de réalisation d'un système de communication sans fil selon l'invention.

### Description de modes de réalisation de l'invention

Dans la suite de la description, on se place dans le cas où le contenu multimédia à distribuer est une vidéo, parce que la distribution de vidéo à la demande constitue une application particulièrement intéressante de l'invention. Ceci n'est pas restrictif. L'invention est applicable d'une façon générale à tout type de contenu multimédia (audio, images fixes...).

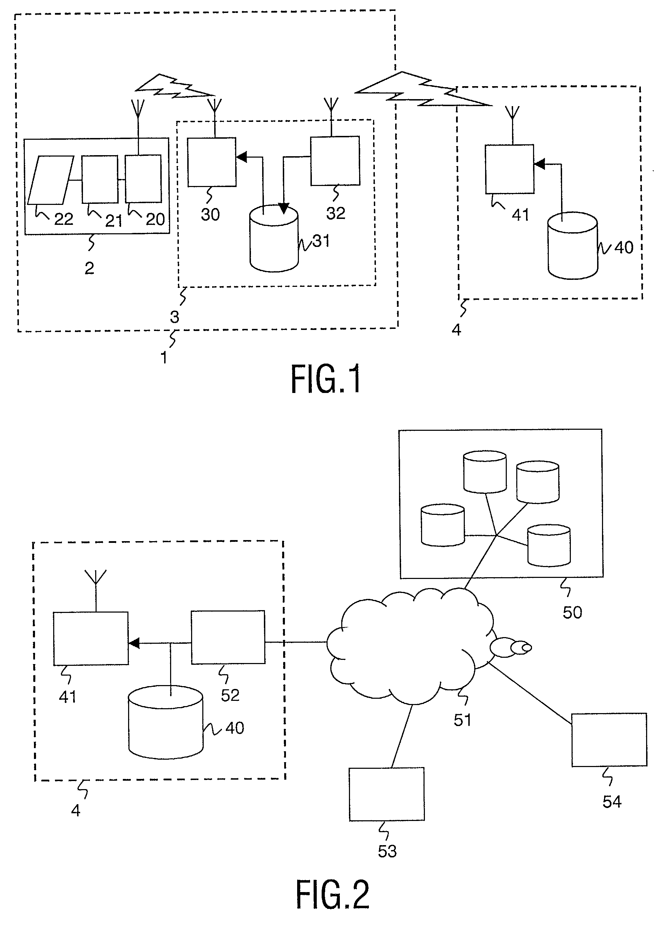

Sur la figure 1, on a représenté un schéma en blocs d'un premier mode de réalisation d'un système de communication sans fil selon l'invention. D'après la figure 1, un système de communication sans fil selon l'invention comporte un terminal mobile 1 constitué d'un dispositif portable 2 de visualisation de vidéo et d'une station de base 3. Il comporte aussi un serveur 4. Le dispositif portable 2 comporte un module de transmission sans fil 20, un module de traitement vidéo 21, et un écran de visualisation 22. La station de base 3 comporte un module de transmission sans fil 30 du même type que le module de transmission sans fil 20, une mémoire de stockage de vidéo 31, et un module de téléchargement sans fil 32. Le serveur 4 comporte une base de données 40 et un module de téléchargement sans fil 41 du même type que le module de téléchargement sans fil 32. L'écran 22 est prévu pour proposer à l'utilisateur une interface homme machine (non représentée sur la figure) pour lui permettre de sélectionner et de payer un film à télécharger. La base de données 40 est par exemple stockée sur circuit intégré ou sur un disque dur. Les modules de transmission sans fil 20 et 30 sont par exemple basés sur la norme de communication sans fil dite «Bluetooth» (la norme Bluetooth concerne une liaison radio faible portée à 2,4Ghz ayant un débit de 1Mbps). Toute autre norme de communication sans fil ayant un débit compris entre 600kbps et 1Mbps est également utilisable. Les modules de téléchargement 22 et 31 sont par exemple basés sur la norme IEEE 802.11b (la norme IEEE 802.11b est une norme de transmission sans fil pour réseau locaux ayant un débit de 11Mbps). Toute autre norme de communication sans fil ayant un débit supérieur à plusieurs Megabits par seconde est également utilisable.

Le serveur 4 est avantageusement localisé dans une aire de services, par exemple dans station service, dans une aire de stationnement commerciale, dans une aire de stationnement touristique, dans une aire de repos d'autoroute... Le serveur 4 est alors géré par un prestataire de service.

Sur la figure 2, on a représenté un deuxième mode de réalisation d'un système selon l'invention. D'après la figure 2, le serveur 4 est un relais avec stockage local vers un serveur distant 50 via le réseau Internet 51. Le serveur 4 comporte un module 52 de connexion vers l'Internet. Le contenu de la base de données 40 du serveur 4 est géré par un gestionnaire distant 53 qui est aussi relié au réseau Internet 51. Le gestionnaire distant 53 décide des suppressions et des ajouts à faire au catalogue. Il tient le catalogue à jour et modifie les prix. Il initie le téléchargement de contenu du serveur distant 50 vers le serveur 4. Pour effectuer le paiement, une transaction sécurisée est établie entre le dispositif portable 2 et un serveur de transaction 54 qui est aussi relié au réseau Internet 51.

Dans un troisième mode de réalisation non représenté, l'accès entre le serveur 4 et le serveur distant 50 est suffisamment rapide pour qu'il n'y ait pas besoin de stocker les contenus multimédia au niveau du serveur 4.

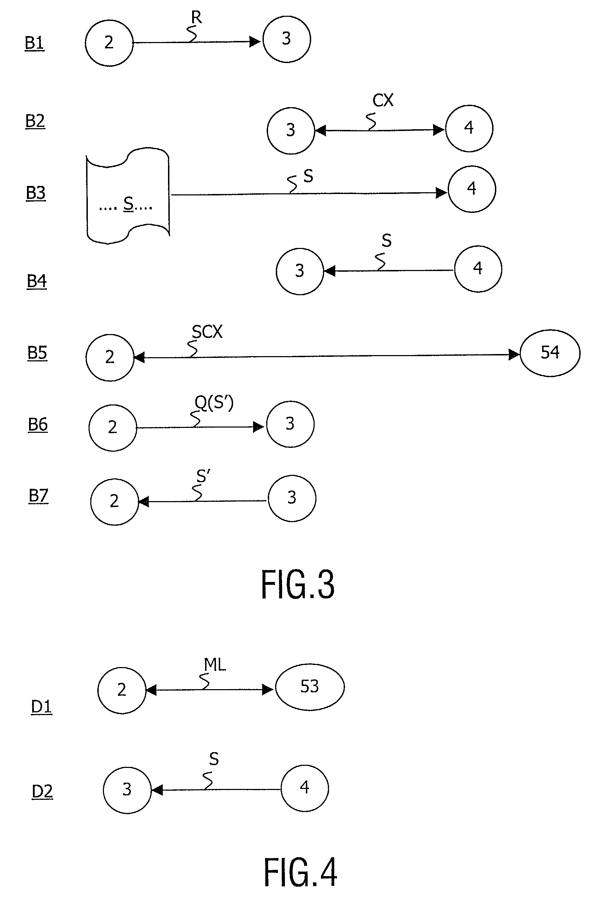

Sur la figure 3 on a représenté les différentes étapes d'un premier mode de réalisation d'un procédé selon l'invention de distribution de contenu multimédia. A l'étape B1, un utilisateur forme une requête R d'accès à un service de distribution de contenu multimédia. Cette requête R est transmise à la station de base 3 qui initie une connexion CX avec le serveur 3. La connexion entre la station de base 3 et le serveur 4 est établie à l'étape B2, si la station de base 3 est dans la zone de couverture du serveur 4. A l'étape B3, l'utilisateur accède à un catalogue de contenus multimédia en utilisant un protocole de transport du type HTTP (Hypertext Transfer Protocol) et un langage de description de documents du type HTML (HyperText Markup Language) ou XML (Extensible Markup Language), et il sélectionne un contenu S. Le catalogue contient par exemple des films, des jeux, des informations touristiques... A l'étape B4, le contenu sélectionné S est téléchargé du serveur 4 vers la station de base 3, par exemple en utilisant un protocole de transfert de fichier du type FTP (File Transfer Protocol). A titre d'exemple, un tel téléchargement dure environ 8mn pour un fichier de 650 Mbytes sur une connexion IEEE 802.11b. Le fichier téléchargé est stocké dans la mémoire de stockage 31. A l'étape B5, une connexion sécurisée SCX est établie entre le dispositif portable 2 et le serveur de transaction 54 pour payer le contenu téléchargé S, pour une ou plusieurs visualisations. A l'étape B6, l'utilisateur forme une requête Q de visualisation d'un contenu S' stocké dans la mémoire de stockage 31. A l'étape B7, le contenu S' est transmis et visualisé sur l'écran 22 au fur et à mesure de la transmission. HTTP, HTML et XML sont des normes définies par le consortium W3C. FTP est une norme définie par l'IETF.

Sur la figure 4 on a représenté un deuxième mode de réalisation d'un procédé selon l'invention de distribution de contenu multimédia. Dans ce deuxième mode de réalisation, le choix du contenu et le paiement se font à l'avance, à l'étape D1, avant d'entrer dans la zone de couverture du serveur 4, par exemple via un liaison mobile MC du type WAP (Wireless Access Protocol ; WAP est une version allégée d'Internet pour les applications mobiles) établie entre la station de base 3 et le gestionnaire distant 53. Le téléchargement commence lorsque la station de base 3 entre dans la zone de couverture du serveur 4 (étape D2).

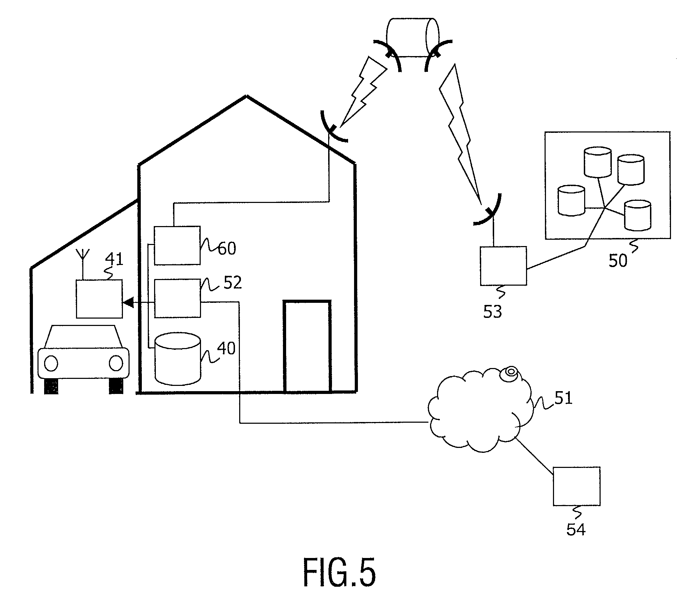

Sur la figure 5, on a représenté un quatrième mode de réalisation d'un système de distribution selon l'invention. Dans ce mode de réalisation, le serveur 4 est localisé dans le garage du propriétaire de la voiture. Le serveur 4 comporte en plus du module 41 de transmission sans fil et du module 52 de connexion vers l'Internet, un module 60 de réception satellite. La base de donnée 40 du serveur 4 est gérée par un gestionnaire distant 53 via une liaison satellite. Le gestionnaire distant 53 est connecté à un serveur distant 50. Pour effectuer le paiement, une transaction sécurisée est établie entre le dispositif portable 2 et un serveur de transaction 54 qui est aussi relié au réseau Internet 51. Ce mode quatrième mode de réalisation permet par exemple à l'utilisateur de charger des contenus multimédia dans la station de base dont sa voiture est équipée avant de partir en voyage.

## Revendications

1. Système de communication sans fil comportant au moins un serveur (4) et un terminal mobile (1) pour télécharger des données dudit serveur vers ledit terminal mobile, ledit terminal mobile comportant une mémoire (31) de stockage des données téléchargées,
**caractérisé en ce que** lesdites données constituant un contenu multimédia,
- ledit terminal mobile comporte une station de base (3) et un dispositif portable d'utilisation de contenu multimédia (2), ladite mémoire de stockage étant contenue dans ladite station de base,
- ledit serveur et ladite station de base comportent un module de téléchargement sans fil (32 ; 41) ayant un débit suffisant pour télécharger rapidement un contenu multimédia dudit serveur vers ladite station de base lorsque ladite station de base est dans une zone de couverture dudit serveur,
- et ladite station de base et ledit dispositif portable comportent un module de transmission sans fil (20 ; 30) ayant un débit suffisant pour transmettre audit dispositif portable un contenu multimédia stocké dans ladite mémoire de stockage, pour une utilisation dudit contenu multimédia au fur et à mesure de ladite transmission.

2. Système de communication sans fil selon la revendication 1, **caractérisé en ce que** ledit dispositif portable comporte une interface utilisateur pour sélectionner un contenu multimédia à télécharger.

3. Station de base (3) contenant un module de téléchargement sans fil (32) pour télécharger un contenu multimédia depuis un serveur (4) lorsque ladite station de base se trouve dans une zone de couverture dudit serveur, une mémoire de stockage (31) du contenu multimédia téléchargé, et un module de transmission sans fil (30) pour transmettre un contenu multimédia stocké dans ladite mémoire de stockage vers un dispositif portable d'utilisation de contenu multimédia (2), pour une utilisation dudit contenu multimédia au fur et à mesure de la transmission.

4. Véhicule comportant une station de base selon la revendication 3.

5. Dispositif portable d'utilisation d'un contenu multimédia (2) comportant un module de transmission sans fil (20) pour recevoir un contenu multimédia en provenance d'une station de base (3) dotée d'une mémoire (31) de stockage dudit contenu multimédia, pour une utilisation dudit contenu multimédia au fur et à mesure de sa réception.

6. Dispositif portable selon la revendication 5, **caractérisé en ce qu'**il comporte une interface utilisateur pour sélectionner un contenu multimédia à télécharger d'un serveur vers ladite station de base.

7. Procédé de distribution d'un contenu multimédia **caractérisé en ce qu'**il comporte une étape (B4) de téléchargement par liaison sans fil dudit contenu multimédia d'un serveur (4) vers une station de base (3), en vue du stockage dudit contenu multimédia dans une mémoire (31) de stockage de ladite station de base, pour une transmission sans fil ultérieure dudit contenu multimédia vers un dispositif portable d'utilisation de contenu multimédia (2), et une utilisation dudit contenu multimédia au fur et à mesure de ladite transmission.

8. Procédé de distribution d'un contenu multimédia selon la revendication 7, **caractérisé en ce qu'**il comporte une étape (B3) de sélection du contenu multimédia à télécharger via une interface utilisateur dudit dispositif portable.

9. Procédé de distribution d'un contenu multimédia selon la revendication 8, **caractérisé en ce qu'**il comporte une étape (B5) de paiement du contenu multimédia sélectionné en vue d'une ou plusieurs visualisations.

10. Procédé de distribution de contenu multimédia selon la revendication 7, **caractérisé en ce que** ladite station de base est placée dans un véhicule et ledit serveur est placée dans une aire de services et/ou de stationnement.

11. Serveur (4) destiné à être utilisé dans un système de communication sans fil selon la revendication 1.
